# FASCICULE DE BREVET EUROPEEN

(11) **EP 0 565 394 B1**
(45) Date de publication et mention de la délivrance du brevet: **07.02.1996**
(21) Numéro de dépôt: 93400641.2
(22) Date de dépôt: 12.03.1993
(51) Int. Cl.: C09J 7/04, C09J 133/06, C09J 163/00, C09J 167/00, D06M 17/04, A41D 27/06

(54) **Entoilage thermocollant biphasique et son procédé de fabrication**
Zweiphasiger, heisssiegelbarer Einlagestoff und Verfahren zu dessen Herstellung
Two-phase heat-sealable interlining and method for its manufacture

(30) Priorité: 10.04.1992 FR 9203734
(43) Date de publication de la demande: 13.10.1993
(73) Titulaire: LAINIERE DE PICARDIE, F-80200 Peronne (FR)
(72) Inventeur: Trabelsi, Foued, F-80200 Peronne (FR)
(74) Mandataire: Derambure, Christian

(56) Documents cités:
- EP-A- 0 099 448
- EP-A- 0 329 493
- DE-A- 1 694 245
- DE-A- 1 956 605
- DE-A- 2 515 776
- FR-A- 2 241 604

## Description

L'invention concerne un entoilage thermocollant biphasique.

De manière générale, les entoilages thermocollants doivent pouvoir être stockés après que le support textile ait reçu la couche de polymères et ils sont destinés, par l'effet de la variation d'un paramètre extérieur, à devenir collants permettant ainsi leur adhésion sur un autre tissu.

Les produits thermocollants sont maintenant couramment utilisés dans l'industrie textile par exemple comme tissus de renfort, leur application sur les doublures ou sur les draperies permettant de modifier les caractéristiques des tissus améliorant leur tenue et leur nervosité. Les supports textiles mis en oeuvre sont très variés. Ils peuvent être tissés, tricotés ou non tissés.

Les modalités d'application de la couche adhésive sur son support sont nombreuses. Pour de nombreux usages, une application par points permettant de conserver une grande souplesse aux tissus est préférée alors que pour d'autres usages, une couche continue d'adhésif permet mieux d'atteindre les propriétés recherchées.

Dans le cas de tissu de renfort, le support textile est enduit avec la substance thermocollante. Actuellement, cette enduction est le plus souvent une enduction par points réalisée à l'aide d'un cylindre gravé. Les polymères thermocollants initialement sous forme de poudre ou de pâte sont portés à une température qui leur permet d'entrer en fusion et d'adhérer au support. Selon une autre technique, l'enduction est réalisée par transfert, c'est-à-dire que les polymères thermocollants sont déposés sous forme de points par un cylindre de gravure sur un tapis traité pour être non adhésif ; ces points sont alors transférés à une température plus faible sur le support textile.

L'entoilage thermocollant ainsi obtenu est ensuite stocké à température ambiante. Il est alors nécessaire que les différentes couches de ce produit, en contact, n'adhèrent pas les unes avec les autres. L'entoilage thermocollant ne doit pas présenter un effet poisseux et des propriétés adhésives à température ambiante ("tack").

Au cours de ce stockage, il est également nécessaire que le processus de vieillissement du produit n'entrave pas ses propriétés d'adhésion nécessaires au contrecollage ultérieur.

L'entoilage thermocollant est alors utilisé par les confectionneurs qui l'appliquent contre d'autres tissus, draperies ou doublures, et réalisent ainsi le collage du tissu de renfort sur la draperie à l'aide d'une presse à des pressions de quelques décibars à quelques bars pendant des temps relativement courts de l'ordre de 10 à 30 secondes et à des températures généralement supérieures à 100°C. Au cours de cette phase, les polymères de l'entoilage thermocollant doivent retrouver leur propriété d'adhésion. Toutefois, ils ne doivent pas avoir une trop faible viscosité pendant un temps trop long lors de cette opération car sinon les polymères traversent le support textile ou la draperie causant des problèmes de retour et traversée qui rendent les produits obtenus peu attractifs et souvent inutilisables.

Enfin les vêtements terminés et donc en particulier les draperies ou doublures munies de tissus de renfort doivent supporter les différents modes d'utilisation, le lavage, le repassage, etc. Le collage réalisé à l'étape précédente doit donc résister à des ambiances difficiles.

De nombreuses tentatives ont été faites pour réaliser des produits bien adaptés aux différentes contraintes résultant de l'ensemble des phases mentionnées plus haut.

Ainsi, il a été proposé par exemple de réaliser un adhésif constitué de deux ou plusieurs couches de polymères de caractéristiques physiques différentes. En choisissant convenablement la viscosité et la température de fusion de ces différentes couches, on peut ainsi limiter les traversées ou les retours (documents FR-A-2 318 914, DE-A-2 461 845, FR-A-2 576 191). Toutefois, la mise en oeuvre de ces techniques révèle soit un manque de cohésion mécanique des deux couches de polymères, soit des difficultés de mise en oeuvre délicates à surpasser, soit une mauvaise régularité de la deuxième couche.

Le document FR-A-2 023 354 décrit une triplure thermosoudable constituée d'une structure textile revêtue sur au moins une de ses faces d'un polymère ou d'un mélange de polymères essentiellement non réticulé au moment de l'application. Au moins une fraction de cette enduction est transformée par chauffage en matière plastique insoluble et présente, au moins au moment du thermosoudage une structure poreuse ou de mousse.

Plus récemment, le document US-A-3 937 859 décrit une composition thermoplastique/thermoréticulante dans laquelle la partie thermoplastique est un copolymère d'oléfine et de chlorure de vinyle. La présence de chlore, site de polymérisation hyper-réactif, engendre des problèmes quant au contrôle du cheminement de la réaction de réticulation et a pour conséquence un mauvais vieillissement du produit textile.

Le document EP-A-0 329 493 concerne un produit textile thermocollant comprenant un support textile et une couche adhésive comportant un polymère thermoadhésif et un agent de réticulation activable par la chaleur. De telles caractéristiques permettent d'éviter le contrecollage du produit textile thermocollant sans retours ni traversées mais le problème du vieillissement d'un tel produit n'est pas envisagé.

Il ressort que la mise en oeuvre des entoilages thermocollants est confrontée aux problèmes suivants :
- interpénétration des deux couches, lors de l'enduction, par mélange de la base du point de la couche supérieure avec le sommet du point de la sous-couche ;
- durcissement du textile lorsque l'enduction est trop importante en poids ;
- contrôle difficile de la vitesse et du degré d'avancement de la réaction de réticulation du système réactif ainsi que du vieillissement de l'entoilage thermocollant au moment du stockage.

Un premier objet de la présente invention est donc de proposer un entoilage thermocollant qui, d'une part, permet de pallier les inconvénients mentionnés ci-dessus et, d'autre part, ne transperce pas la draperie et ne produit pas de retour, c'est-à-dire ne transperce pas le support textile de l'entoilage ; dont la force de collage est augmentée d'un facteur important et qui présente un vieillissement nettement amélioré au cours du temps.

Plus particulièrement, le but de la présente invention est de proposer l'utilisation d'une couche adhésive unique présentant une structure biphasique entrant dans la structure de l'entoilage thermocollant et assurant une bonne force de collage, l'élimination des traversées à la vapeur, une bonne tenue du complexe thermocollant-draperie aux cycles de vaporisage-nettoyage à sec, une bonne tenue au lavage à haute température.

Un deuxième objet de l'invention est de proposer un procédé de fabrication d'un complexe thermocollant-draperie.

A cet effet, l'invention propose tout d'abord un entoilage thermocollant comportant un support textile associé à une couche adhésive unique, destiné à être contrecollé sur une draperie.

Selon l'invention, la couche adhésive associée au support textile présente une structure biphasique comportant :
(i) au moins un système collant sous la forme d'une poudre thermoplastique de granules denses dont la fonction principale est d'assurer l'adhésion de l'entoilage thermocollant sur la draperie au moment du contrecollage ;
(ii) au moins un système réticulable comportant au moins une résine réticulable et au moins un durcisseur, sous la forme d'une matrice homogène, dont la fonction principale est d'enrober les granules de poudre thermoplastique du système collant.

Le ou les durcisseur(s) du système réticulable est (sont) choisi(s) dans le groupe incluant les résines mélamines modifiées sous forme de prépolymères.

Les prépolymères de résines mélamines modifiées sont choisies dans le groupe incluant les prépolymères ayant un degré de polymérisation compris entre environ 1 et 3.

Selon un premier mode de réalisation possible, les résines mélamines modifiées sont choisies dans le groupe incluant les résines mélamines modifiées partiellement alkylées avec un taux élevé de fonction imine : 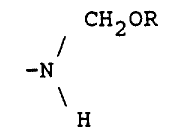 dans lesquelles le radical R est choisi dans le groupe incluant les radicaux méthyle, éthyle, propyle, butyle, isobutyle.

Selon un deuxième mode de réalisation possible, les résines mélamines modifiées sont choisies dans le groupe incluant les résines mélamines modifiées complètement alkylées : 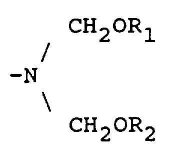 dans lesquelles les radicaux R₁ et R₂ sont identiques ou différents et choisis dans le groupe incluant les radicaux méthyle, éthyle, propyle, butyle, isobutyle.

La résine réticulable du système réticulable est choisie dans le groupe incluant les polymères solubles à l'eau ou en milieu solvant. Notamment, la résine réticulable est choisie dans le groupe incluant les résines époxydes, résines alkydes, résines polyester, les résines acryliques, seules ou en mélange entre elles.

En outre, le système réticulable peut comprendre un catalyseur de réticulation notamment choisi dans le groupe incluant l'acide paratoluène sulfonique, l'acide oxalique, l'acide phosphorique, le chlorure d'ammonium, le chlorure de magnésium.

La poudre thermoplastique du système collant, quant à elle, est constituée de un ou plusieurs polymères thermoplastiques thermo-adhésifs choisis dans le groupe incluant les polyamides, les polyesters, seuls ou en mélange entre eux, les polymères étant notamment choisis dans le groupe incluant les polymères ayant un point de fusion compris entre 80°C et 130°C, la poudre thermoplastique ayant une granulométrie comprise entre environ 1 et 100µm.

L'invention propose également un complexe thermocollant-draperie, dans lequel les chaînes de polymères thermoplastiques du système collant sont emprisonnées dans un réseau réticulé formé par la résine réticulable et le ou les durcisseur(s) du système réticulable, formant ainsi des réseaux polymères semi-interpénétrés.

L'utilisation d'une couche adhésive présentant une structure biphasique comportant un système collant sous forme de poudre thermoplastique et un système réticulable sous forme de matrice homogène offre plusieurs avantages :
- Les grains de la poudre thermoplastique, parfaitement enrobés et liés par le système réticulable, jouent le rôle d'une charge permettant de maintenir l'ensemble à une viscosité suffisamment élevée afin d'éviter sa pénétration dans le support textile.
- Le séchage de l'entoilage thermocollant à une température inférieure à la température de réticulation permet de ramollir légèrement la poudre thermoplastique qui reste sous forme de granules et d'accrocher suffisamment la couche adhésive sur le support textile.
- La forte présence de fonction imine (-NH) dans la mélamine modifiée, à côté des groupes réactifs (hydroxyle, carboxyle, etc.) de la résine réticulable confère au système réticulable de la couche adhésive de l'entoilage thermocollant une grande réactivité.

Or, il est bien connu que la force de collage est directement liée au degré d'avancement de la réaction de réticulation. Plus la réactivité du système réticulable dans la couche adhésive est grande, plus l'augmentation de cette force de collage après réticulation est importante.

L'efficacité de cette réaction de réticulation se traduit par :
- l'augmentation de la force de collage ;
- l'élimination des traversées à la vapeur ;
- une bonne tenue du complexe thermocollant-draperie aux cycles de vaporisage-nettoyage à sec sans le moindre cloquage ;
- une bonne tenue au lavage à haute température supérieure ou égale à 45°C.

D'autres caractéristiques et avantages de l'invention apparaîtront à la lecture de la description détaillée et des exemples qui suivront.

L'entoilage thermocollant selon l'invention comporte un support textile associé à une couche adhésive unique. Il est destiné à être contrecollé sur une draperie. Le support textile mis en oeuvre peut-être de différentes natures. Il peut être tissé, tricoté ou non-tissé.

La couche adhésive est donc associée au support textile, ce qui signifie qu'elle est en contact avec le support textile.

La couche adhésive unique est en matière plastique et est essentiellement constituée de deux systèmes dont les fonctions attendues sont différentes.

Plus particulièrement, la couche adhésive unique présente une structure biphasique comportant :
- au moins un système collant sous la forme d'une poudre thermoplastique de granules denses dont la fonction principale est d'assurer l'adhésion de l'entoilage thermocollant sur la draperie au moment du contrecollage ;
- au moins un système réticulable comportant au moins une résine réticulable et au moins un durcisseur, sous la forme d'une matrice homogène, dont la fonction principale est d'enrober les granules de poudre thermoplastique du système collant.

Selon l'invention, le système collant est donc sous forme de poudre thermoplastique de granules denses.

On appelle granules denses des granules qui au contact de la matrice homogène réticulable ou lorsqu'ils sont soumis à une température de séchage inférieure à celle du déclenchement de la réaction de réticulation, ne se dissolvent pas, gardent un degré de compactage sensiblement identique à celui initial.

La poudre thermoplastique de granules denses à une granulométrie comprises entre environ 1 et 100µm.

Elle est constituée généralement d'un seul ou d'un mélange de polymères thermoplastiques thermo-adhésifs.

Ces thermoplastiques de structure chimique linéaire ne contiennent pas de fonctions chimiques réactives susceptibles de provoquer une transformation chimique, à savoir une réticulation.

Ils se ramollissent sous l'effet de la chaleur et durcissent à froid, ceci de façon réversible.

La poudre thermoplastique du système collant est constituée de un ou plusieurs polymères thermoplastiques thermo-adhésifs choisis dans le groupe incluant les polyamides, les polyesters, seuls ou en mélange entre eux.

Les polymères de la poudre thermoplastique sont choisis dans le groupe incluant les polymères ayant un point de fusion compris entre 80°C et 130°C.

La couche adhésive unique présentant une structure biphasique comporte également un système réticulable dont la principale fonction est d'enrober les granules denses de poudre thermoplastique.

Ce système réticulable est destiné à réagir sous l'effet de la chaleur et de la pression provoquant un durcissement de la couche adhésive.

Ce système, une fois réticulé, limite les traversées à la vapeur, voire même les élimine et confère au complexe thermocollant-draperie une bonne résistance à l'usage, particulièrement aux agents de nettoyage des vêtements et au lavage à haute température supérieure ou égale à 45°C.

Le système réticulable comporte au moins une résine réticulables et au moins un durcisseur sous la forme d'une matrice homogène.

La résine réticulable du type de l'invention est choisie dans le groupe incluant les polymères solubles à l'eau ou en milieu solvant.

Plus particulièrement, la résine réticulable du type de l'invention est choisie dans le groupe incluant les résines époxydes, résines alkydes, résines polyester, les résines acryliques, seules ou en mélange entre elles.

Ces chaînes polymériques, solubles à l'eau ou en milieu solvant, contiennent des groupements carboxyliques, hydroxyliques ou amides leur permettant de subir une réaction chimique irréversible, dite réaction de réticulation, quand ils sont chauffés à une température bien précise, dite température de réticulation ou de durcissement.

Ce processus est généralement provoqué et accéléré par l'addition d'un durcisseur et d'un catalyseur.

Le ou les durcisseur(s) ou agent(s) de réticulation est (sont) choisi(s) dans le groupe incluant les résines mélamines modifiées sous forme de prépolymères.

Les prépolymères de résines mélamines modifiées sont choisis dans le groupe incluant les prépolymères ayant un degré de polymérisation compris entre environ 1 et 3.

On appelle degré de polymérisation le nombre moyen d'unité triazine par molécule.

Les résines mélamines modifiées du type de celles utilisées dans la présente invention ont la formule générale suivante

### EXEMPLE DE STRUCTURE DE MELAMINE.

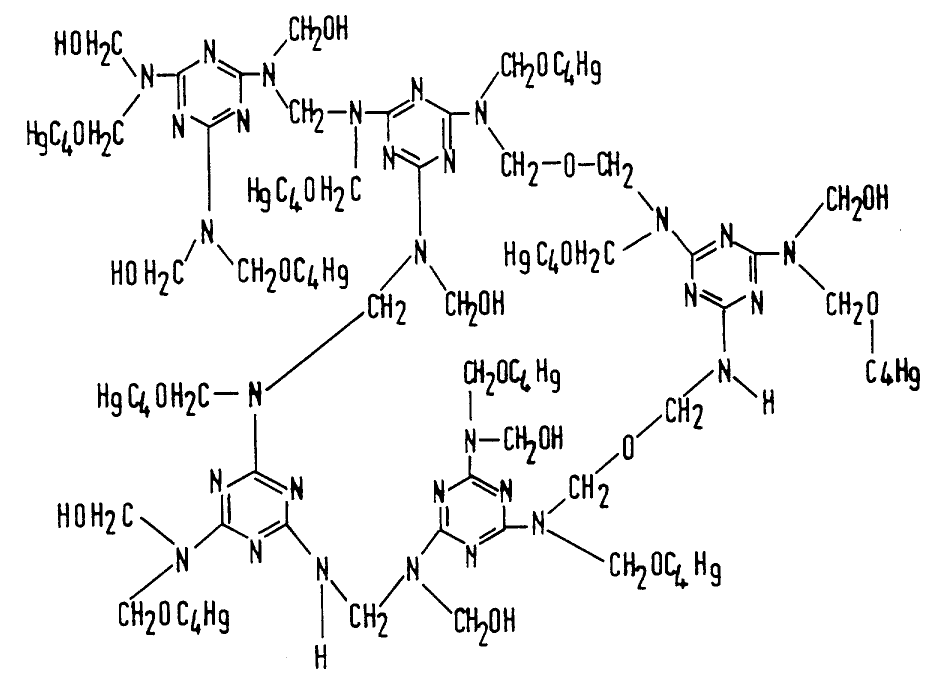

Différentes résines mélamines modifiées ont été utilisées dans la présente invention.

Selon un premier mode de réalisation, les résines mélamines modifiées sont choisies dans le groupe incluant les résines mélamines modifiées partiellement alkylées avec un taux élevé de fonction imine : 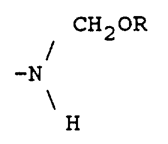 dans lesquelles le radical R est choisi dans le groupe incluant les radicaux méthyle, éthyle, propyle, butyle, isobutyle.

Selon un deuxième mode de réalisation, les résines mélamines sont choisies dans le groupe incluant les résines mélamines modifiées complètement alkylées : 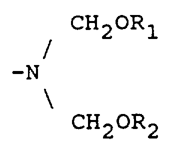 dans lesquelles les radicaux R₁ et R₂ sont identiques ou différents et choisis dans le groupe incluant les radicaux méthyle, éthyle, propyle, butyle, isobutyle.

La nature et le degré d'alkylation ont beaucoup d'influence sur la vitesse de la réaction de réticulation du système réticulable ainsi que sur le vieillissement de l'entoilage thermocollant fini au moment du stockage.

Le système réticulable peut comprendre en outre un catalyseur de réticulation.

Celui-ci est choisi dans le groupe incluant l'acide paratoluène sulfonique, l'acide oxalique, l'acide phosphorique, le chlorure d'ammonium, le chlorure de magnésium.

L'invention concerne également un complexe thermocollant-draperie qui est tel qu'il est constitué d'un entoilage thermocollant du type décrit ci-dessus dans lequel les chaînes de polymères thermoplastiques sont emprisonnées dans un réseau réticulé formé par la résine réticulable et le ou les durcisseur(s) du système réticulable.

On assiste ainsi à la formation de réseaux polymères semi-interpénétrés.

L'invention concerne enfin un procédé de fabrication de complexe thermocollant-draperie, dans lequel un support textile reçoit une enduction par points d'une couche adhésive à l'aide d'un cylindre gravé (cadre sérigraphique et cylindre héliographique).

Dans ce procédé :

On prépare un système réticulable comportant au moins une résine réticulable et au moins un durcisseur, sous la forme d'une matière homogène.

Puis, on prépare la pâte d'enduction en dispersant une poudre thermoplastique dans ladite matrice.

A la suite de quoi, on applique la pâte d'enduction ainsi préparée sur un support textile par enduction par point au cadre rotatif.

On soumet alors l'ensemble (support textile + pâte d'enduction) à une température de séchage inférieure à celle du déclenchement de réticulation.

Cette étape du procédé permet d'évaporer l'eau et éventuellement les solvants, de ramollir la poudre thermoplastique sans que la matière thermoplastique la constituant n'entre en fusion complète, ceci afin d'accrocher suffisamment la couche adhésive sur le support textile.

Les granules de la poudre thermoplastique se ramollissent sous l'effet de la température de séchage. On comprend donc que la poudre thermoplastique reste sous forme de granules après l'étape de séchage, seule la consistance des granules est un peu moins dense qu'initialement.

Les granules de poudre thermoplastique utilisés dans la présente invention ont en fait deux rôles :
- d'une part, ils permettent l'accrochage de la couche adhésive sur le support textile ;
- d'autre part, ces granules de poudre thermoplastique, parfaitement enrobés et liés par le système réticulable, jouent le rôle d'une charge permettant de maintenir ce système à une viscosité suffisamment élevée pour éviter et minimiser sa pénétration dans le support textile.

La couche adhésive, après séchage, présente une structure biphasique, avec des granules denses en matière thermoplastique dans une matrice homogène constituée du polymère réticulable, du durcisseur ou agent de réticulation et éventuellement du catalyseur.

L'entoilage textile thermocollant obtenu dans cette première étape peut alors être stocké à température ambiante.

Par la suite, on déclenche, au moment du contrecollage du thermocollant sur la draperie, la réaction de réticulation par passage sur une presse en continue chauffée à une température de l'ordre de 130°C, sous une pression de quelques bars et pendant un temps relativement court de l'ordre de 15 secondes.

Selon une caractéristique importante de l'invention, on complète la réaction de réticulation par passage du complexe thermocollant-draperie dans un four chauffé à une température de l'ordre de 150°C pendant un temps compris entre de l'ordre de 30 à 60 secondes.

Suite à la préparation de la pâte d'enduction par dispersion de la poudre thermoplastique dans la matrice homogène, on peut également épaissir la pâte au moyen d'un agent épaississant.

Le produit de la présente invention nécessite un mélange précis de résine, de durcisseur et de catalyseur.

Le temps nécessaire à la réticulation dépend alors de la température appliquée, de la quantité et de la nature du durcisseur et du catalyseur introduits dans le système réticulable, et peut varier de quelques secondes à quelques minutes.

A titre d'exemples non limitatifs, on peut mentionner les résultats expérimentaux suivants obtenus pour un entoilage thermocollant dont la couche adhésive a la formulation type suivante :

| | |
|---|---|
| Résine acrylique | 20% |
| Mélamine modifiée | 6% |
| Catalyseur | 1% |
| Polyamide | 30% |
| Eau + adjuvants | 42% |
| Epaississant | 1% |

le poids d'enduction est généralement compris entre 10 et 30 g/m.

### EXEMPLE 1

Les résines mélamines modifiées données dans cet exemple, dont le degré de polymérisation est de l'ordre de 2 à 3, sont partiellement alkylées avec un taux élevé de fonction imine (-NH) 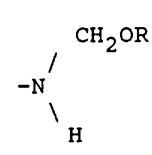 dans lesquelles le radical R est choisi dans le groupe incluant le méthyle, l'éthyle, le propyle, ou l'isobutyle.

Le poids d'enduction est de l'ordre de 15 g/m.

Les résultats sont indiqués dans le tableau ci-dessous :

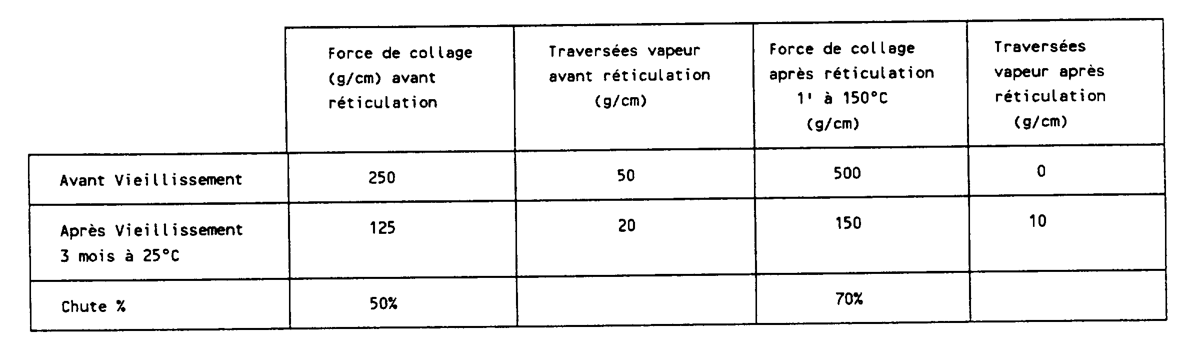

La forte présence de fonction imine dans la mélamine modifiée, à côté de celles des groupes réactifs (hydroxyle, carboxyle, etc.) de la résine acrylique confèrent au système réactif (système réticulable) de la couche adhésive de l'entoilage thermocollant une grande réactivité.

La réaction de réticulation de ce système réactif est déclenchée au moment du contrecollage de l'entoilage thermocollant sur la draperie qui est réalisée sur une presse en continue chauffée à une température de l'ordre de 130°C, sous une pression de quelques bars et pendant un temps relativement court, de l'ordre de 15 secondes.

Cette réaction de durcissement sera complétée en passant le complexe thermocollant-draperie dans un four chauffé par exemple à 150°C pendant un intervalle de temps compris entre 30 secondes et 60 secondes.

En effet, au cours de ce contrecollage, la poudre thermoplastique entre en fusion complète permettant aux chaînes polymères du polyamide de s'interpénétrer avec celles de la résine acrylique tout en s'accrochant mécaniquement sur les fibres textiles.

La réaction de réticulation de la résine acrylique en présence de la mélamine modifiée et du catalyseur renforce cet accrochage mécanique, ce qui explique l'augmentation de la force de collage après réticulation du système réactif.

On assiste alors à la formation de réseaux polymères semi-interpénétrés, c'est-à-dire que les chaînes du polymère thermoplastique (polyamide) sont emprisonnées dans un réseau réticulé formé par la résine acrylique et la mélamine modifiée.

Comme il a été dit plus haut, cette augmentation de la force d'adhésion est directement liée au degré d'avancement de la réaction de réticulation.

Plus la réactivité du système réactif dans la couche adhésive est grande, plus l'augmentation de la force après réticulation est importante (voit tableau ci-dessus et exemple 2).

L'efficacité de cette réaction de réticulation se traduit par :
- l'augmentation de la force de collage qui passe 250 g/cm à 500 g/cm ;
- l'élimination des traversées à la vapeur ;
- la bonne tenue du complexe draperie-thermocollant au cycle de vaporisage suivi d'un nettoyage à sec sans le moindre cloquage (20 cycles) ;
- la bonne tenue au lavage à haute température supérieure ou égale à 45°C.

Mais, cette grande réactivité du système réticulable dans la couche adhésive du thermocollant accélère le processus de vieillissement et rend le produit thermocollant presque inutilisable après un temps relativement court de l'ordre de trois mois à température ambiante (25°C).

Ce mauvais vieillissement au cours du temps se traduit par une chute de la force de collage de 50% sur un produit non réticulé, de 70% sur le même produit avec réticulation et de l'apparition de nouveau des traversées à la vapeur même sur le complexe après son passage dans le four de réticulation.

L'entoilage thermocollant décrit dans cet exemple est donc plutôt destiné au cas où le stockage de cet entoilage est de l'ordre de trois mois.

### EXEMPLE 2

Les résines mélamines modifiées données dans cet exemple, dont le degré de polymérisation est compris entre 1,6 et 2,9, sont complètement alkylées : 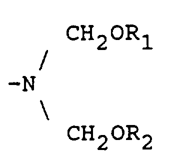 dans lesquelles les radicaux R₁ et R₂ peuvent être identiques ou différents et sont choisis dans le groupe incluant le méthyle, l'éthyle, le propyle, le butyle, ou l'isobutyle.

Le poids de l'enduction est de l'ordre de 15 g/cm.

Les résultats sont indiqués dans le tableau ci-dessous :

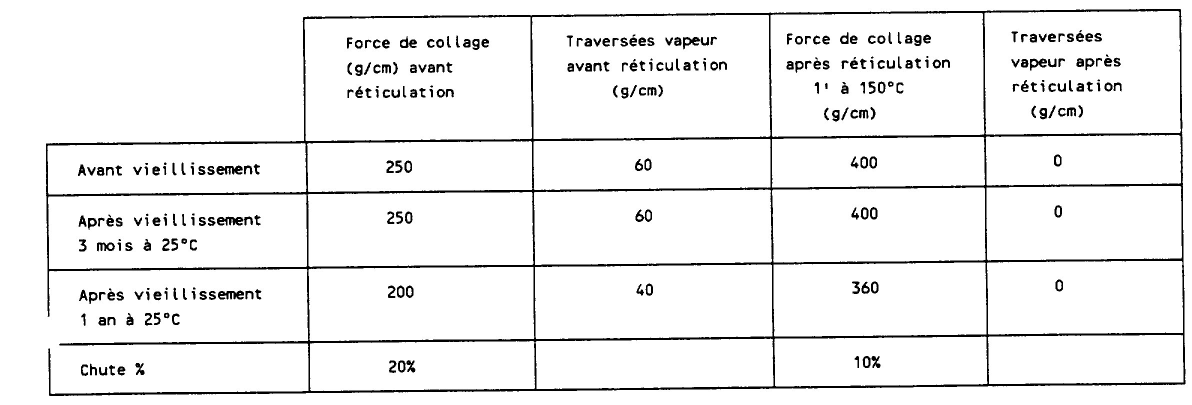

Les résines mélamines complètement alkylées de l'exemple 2 donnent des produits thermocollants aussi performants que ceux réalisés avec les résines partiellement alkylées de l'exemple 1 mais avec un vieillissement nettement amélioré au cours du temps.

Dans l'exemple 2, les chutes des forces de collage (20% sur un collage avant réticulation et 10% sur un collage après réticulation) après un an de vieillissement à température ambiante (25°C) ne sont pas significatives car le produit thermocollant garde pratiquement toutes ses performances de collage et de tenue au traitement une fois contrecollé sur une draperie.

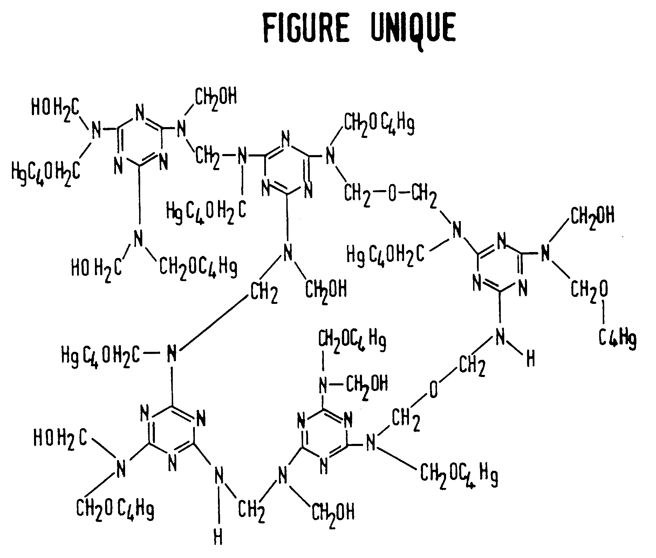

## Revendications

1. Entoilage thermocollant comportant un support textile associé à une couche adhésive unique, destiné à être contrecollé sur une draperie, caractérisé en ce que la couche adhésive présente une structure biphasique comportant :
(i) au moins un système collant sous la forme d'une poudre thermoplastique de granules denses dont la fonction principale est d'assurer l'adhésion de l'entoilage thermocollant sur la draperie au moment du contrecollage ;
(ii) au moins un système réticulable comportant au moins une résine réticulable, au moins un durcisseur et un catalyseur de réticulation, sous la forme d'une matrice homogène, dont la fonction principale est d'enrober les granules de poudre thermoplastique du système collant, le ou les durcisseur(s) étant choisis dans le groupe incluant les résines mélamines modifiées sous forme de prépolymères ayant un degré de polymérisation compris entre environ 1 et 3, afin de contrôler la réaction de réticulation et présenter un vieillissement amélioré au cours du temps.

2. Entoilage thermocollant selon la revendication 1, caractérisé en ce que les résines mélamines modifiées sont choisies dans le groupe incluant les résines mélamines modifiées partiellement alkylées avec un taux élevé de fonction imine : 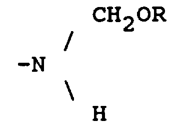
dans lesquelles le radical R est choisi dans le groupe incluant les radicaux méthyle, éthyle, propyle, butyle, isobutyle.

3. Entoilage thermocollant selon la revendication 1 caractérisé en ce que les résines mélamines modifiées sont choisies dans le groupe incluant les résines mélamines modifiées complètement alkylées : 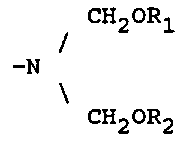 dans lesquelles les radicaux R₁ et R₂ sont identiques ou différents et choisis dans le groupe incluant les radicaux méthyle, éthyle, propyle, butyle, isobutyle.

4. Entoilage thermocollant selon l'une quelconque des revendications 1 à 3, caractérisé en ce que la résine réticulable est choisie dans le groupe incluant les résines époxydes, résines alkydes, résines polyester, les résines acryliques, seules ou en mélange entre elles.

5. Entoilage thermocollant selon l'une quelconque des revendications 1 à 4, caractérisé en ce que le catalyseur de réticulation est choisi dans le groupe incluant l'acide paratoluène sulfonique, l'acide oxalique, l'acide phosphorique, le chlorure d'ammonium, le chlorure de magnésium.

6. Entoilage thermocollant selon l'une quelconque des revendications 1 à 5, caractérisé en ce que la poudre thermoplastique du système collant est constituée d'un ou plusieurs polymères thermoplastiques thermo-adhésifs choisis dans le groupe incluant les polyamides, les polyesters, seuls ou en mélange entre eux.

7. Entoilage thermocollant selon la revendication 6, caractérisé en ce que les polymères de la poudre thermoplastique sont choisis dans le groupe incluant les polymères ayant un point de fusion compris entre 80°C et 130°C.

8. Complexe thermocollant-draperie, caractérisé en ce qu'il est constitué d'un entoilage thermocollant selon l'une quelconque des revendications 1 à 7 dans lequel les chaînes de polymères thermoplastiques sont emprisonnées dans un réseau réticulé formé par la résine réticulable et le ou les durcisseur(s) du système réticulable, formant ainsi des réseaux polymères semi-interpénétrés.

## Patentansprüche

1. Fixierter Einlagestoff, bestehend aus einer mit einer einzigen Klebeschicht assoziierten Stoffunterlage, dazu bestimmt, auf ein Gewebe kaschiert zu werden, dadurch gekennzeichnet, daß die Klebeschicht eine Zweiphasenstruktur aufweist, bestehend aus :
(i) mindestens einem Klebesystem in Form eines thermoplastischen Pulvers aus kompakten Körnern, dessen Hauptfunktion ist, bei der Kaschierung die Haftung des fixierten Einlagestoffs auf dem Gewebe zu gewährleisten;
(ii) mindestens einem Vernetzungssystem, bestehend aus mindestens einem vernetzbaren Harz, mindestens einem Härter und einem Vernetzungskatalysator, in Form einer homogenen Matrix, deren Hauptfunktion ist, die Körner des thermoplastischen Pulvers des Klebesystems zu ummanteln, wobei der bzw. die Härter innerhalb der Gruppe gewählt wird bzw. werden, die die zu Vorpolymerisaten modifizierten Melaminharze mit einem Polymerisationsgrad von etwa 1 bis 3 enthält, so daß die Vernetzung kontrolliert werden kann und sich die Alterung im Laufe der Zeit bessert.

2. Fixierter Einlagestoff gemäß Anspruch 1, dadurch gekennzeichnet, daß die modifizierten Melaminharze innerhalb der Gruppe gewählt werden, die die teils modifizierten, alkylierten Melaminharze mit einem hohen Imin-Funktionsanteil enthält, : 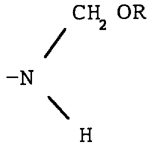 in der das Radikal R innerhalb der Gruppe gewählt wird, der die Methyl-, Ethyl-, Propyl-, Butyl-, Isobutylradikale angehören.

3. Fixierter Einlagestoff gemäß Anspruch 1, dadurch gekennzeichnet, daß die modifizierten Melaminharze innerhalb der Gruppe gewählt werden, die die modifizierten, ganz alkylierten Melamine enthält : 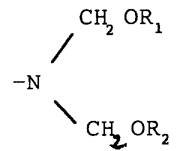 in denen die Radikale R₁ und R₂ identisch oder verschieden sind und innerhalb der Gruppe gewählt werden, der die Methyl-, Ethyl-, Propyl-, Butyl-, Isobutylradikale angehören.

4. Fixierter Einlagestoff gemäß einem der Ansprüche 1 bis 3, dadurch gekennzeichnet, daß der Vernetzungsharz innerhalb der Gruppe gewählt wird, die die Epoxyd-, Alkyd-, Polyester- und Akrylharze, allein oder als Mischung enthält.

5. Fixierter Einlagestoff gemäß einem der Ansprüche 1 bis 4, dadurch gekennzeichnet, daß der Vernetzungskatalysator innerhalb der Gruppe gewählt wird, der die Paratoluen-Sulfosäure, die Oxalsäure, die Phosphorsäure, das Ammoniumchlorid und das Magnesiumchlorid angehören.

6. Fixierter Einlagestoff gemäß einem der Ansprüche 1 bis 5, dadurch gekennzeichnet, daß das thermoplastische Pulver des Klebesystems aus einem oder mehreren thermoplastischen, durch Wärme haftenden Polymeren besteht, die innerhalb der Gruppe gewählt werden, die Polyamide, Polyester, allein oder als Mischung enthält.

7. Fixierter Einlagestoff gemäß Anspruch 6, dadurch gekennzeichnet, daß die Polymere des thermoplastischen Pulvers innerhalb der Gruppe gewählt werden, die Polymere mit einem Schmelzpunkt zwischen 80° C und 130°C enthält.

8. Fixierung-Gewebe-Komplex, dadurch gekennzeichnet, daß er aus einem fixierten Einlagestoff nach einem der Ansprüche 1 bis 7 besteht, in dem die Ketten der thermoplastischen Polymere in einem aus Vernetzungsharz und dem bzw. den Härtern des Vernetzungssystems gebildeten Netz eingeschlossen sind, und auf diese Art und Weise sich gegenseitig halbdurchdringende Polymernetze bilden.

## Claims

1. A thermo-adhesive interlining comprising a textile base combined with a single adhesive layer, for sticking on a cloth, characterised in that the adhesive layer has a two-phase structure comprising :
(i) at least one adhesive system in the form of a dense granules thermoplastic powder the main function of which consists in guaranteeing the adherence of the thermo-adhesive interlining on the cloth, when it is stuck ;
(ii) at least one cross-linkable system comprising at least a cross-linkable resin, at least one hardening agent and a cross-linking catalyst in the form of an homogeneous matrix, the main function of which consists in coating the thermoplastic powder granules of the adhesive system, the hardening agent(s) being selected from the group including modified melamine resins in the form of prepolymers, whose degree of polymerisation is between 1 and 3 approximately, so as to control the cross-linking reaction and have an improved ageing in time.

2. The thermo-adhesive interlining of claim 1, characterised in that the modified melamine resins are selected from the group including the partially alkylated modified melamine resins with a high rate of imin function : 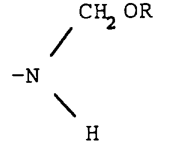 in which the radical R is selected from the group comprising the methyl, ethyl, propyl, butyl, and isobutyl radicals.

3. The thermo-adhesive interlining of claim 1, characterised in that the modified melamine resins are selected from the group including the totally alkylated modified melamine resins : 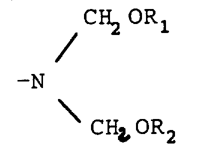 in which the radicals R₁ and R₂ are similar or different and selected from the group comprising the methyl, ethyl, propyl, butyl, and isobutyl radicals.

4. The thermo-adhesive interlining of any of claims 1 to 3, characterised in that the cross-linkable resin is selected from the group comprising the epoxy resins, the alkyd resins, the polyester resins, the acrylic resins, or mixtures thereof.

5. The thermo-adhesive interlining of any of claims 1 to 4, characterised in that the cross-linking catalyst is selected from the group comprising the paratoluene sulphonic acid, the oxalic acid, the phosphoric acid, the ammonium chloride, and the magnesium chloride.

6. The thermo-adhesive interlining of any of claims 1 to 5, characterised in that the thermoplastic powder of the adhesive system is composed of one or more thermo-adhesive thermoplastic polymers selected from the group comprising polyamids, polyesters or mixtures thereof.

7. The thermo-adhesive interlining of claim 6 characterised in that the thermoplastic powder polymers are selected from the group comprising the polymers whose melting point is between 80°C and 130°C.

8. A thermo-adhesive-cloth complex, characterised in that it is composed of a thermo-adhesive interlining of any of claims 1 to 7 in which the thermoplastic polymers chains are locked in a cross-linked network formed by the cross-linkable resin and the hardening agent(s) of the cross-linkable system, thus forming semi-interlocked polymer networks.
